# EUROPEAN PATENT APPLICATION

(11) **EP 4 554 330 A1**
(43) Date of publication of application: **14.05.2025**
(21) Application number: 23834885.8
(22) Date of filing: 05.07.2023
(51) Int. Cl.: H05B 6/64

(54) **CONTROL METHOD FOR HEATING DEVICE, AND HEATING DEVICE**

(30) Priority: 06.07.2022 CN 202210800515
(71) Applicant: Qingdao Haier Refrigerator Co., Ltd., Laoshan District Qingdao Shandong 266101 (CN); Haier Smart Home Co., Ltd., Qingdao, Shandong 266101 (CN)
(72) Inventor: HAN, Zhiqiang, Qingdao, Shandong 266101 (CN); ZHANG, Haizhou, Qingdao, Shandong 266101 (CN); JI, Lisheng, Qingdao, Shandong 266101 (CN); LI, Chunyang, Qingdao, Shandong 266101 (CN); LIU, Yonghao, Qingdao, Shandong 266101 (CN)
(74) Representative: Winter, Brandl - Partnerschaft mbB
(86) International application number: PCT/CN2023/105904
(87) International publication number: WO 2024/008118

(57) **Abstract**

The present application provides a control method for a heating device and the heating device itself. The control method includes: controlling the electromagnetic wave generation system to adjust the frequency of the electromagnetic waves it generates within an alternative frequency range at a test power, obtaining reflection parameters corresponding to each frequency generated by the electromagnetic wave generation system, and determining an initial frequency based on the reflection parameters; controlling the electromagnetic wave generation system to generate electromagnetic waves at a heating power and the initial frequency; wherein the test power is less than the heating power.

## Description

### TECHNICAL FIELD

The present application relates to the field of food processing, particularly to a control method for an electromagnetic wave heating device and the heating device.

### BACKGROUND

The quality of the food is maintained while the food is frozen. However, frozen food requires thawing before processing or consumption. To enhance thawing efficiency and ensure thawing quality, electromagnetic wave heating devices are commonly used for thawing food.

Different parameters of food have different abilities to absorb electromagnetic waves, and in order to further improve thawing efficiency, the prior art determines the optimal frequency with the best thawing efficiency by traversing and comparing all selectable frequencies of the system , and thaws the food in accordance with the determined optimal frequency. However, this method not only requires excessive time to determine the optimal frequency but also faces difficulties in ensuring the accuracy of the optimal frequency and the quality of the food.

### SUMMARY

A primary objective of the first aspect of the present application is to overcome at least one technical deficiency in the prior art by providing a control method for a heating device.

A further objective of the first aspect is to ensure the accuracy of the initial frequency.

Another further objective of the first aspect is to enhance the efficiency of determining the optimal frequency.

A primary objective of the second aspect of the present application is to provide an electromagnetic wave heating device.

According to the first aspect of the present application, there is provided a control method for a heating device, the heating device comprising a cavity for placing an object to be processed, and an electromagnetic wave generation system for generating electromagnetic waves in the cavity to heat the object to be processed, wherein the control method comprises:
a step of determining an initial frequency: controlling the electromagnetic wave generation system to adjust the frequency of the electromagnetic waves it generates within an alternative frequency range at a test power, obtaining reflection parameters corresponding to each frequency generated by the electromagnetic wave generation system, and determining an initial frequency based on the reflection parameters;
a step of heating the object to be processed: controlling the electromagnetic wave generation system to generate electromagnetic waves at a power of a heating power and a frequency of the initial frequency to heat the object to be processed; wherein,
the test power is less than the heating power.

Optionally, the test power is 8W to 15W; and the alternative frequency range is 350MHz to 500MHz.

Optionally, the heating power is 60W to 100W.

Optionally, in the step of heating the object to be processed, the frequency of the electromagnetic waves is first adjusted to the initial frequency, and then the power of the electromagnetic waves is adjusted to the heating power.

Optionally, after the step of determining an initial frequency, further comprising:
a frequency matching step: if a preset frequency modulation condition is met, pausing the step of heating the object to be processed, controlling the electromagnetic wave generation system to adjust the frequency of the electromagnetic waves it generates to meet a preset matching condition, correcting the frequency of the electromagnetic waves in the step of heating the object to be processed to the frequency that meets the preset matching condition, and continuing the step of heating the object to be processed; wherein,
the power of the electromagnetic waves in the frequency matching step is the same as the power of the electromagnetic waves in the step of heating the object to be processed.

Optionally, the step of determining an initial frequency further comprises:
a reference frequency determination step: controlling the electromagnetic wave generation system to adjust the frequency of the electromagnetic waves it generates within a preset alternative frequency range at a preset first step size, obtaining reflection parameters corresponding to each frequency generated by the electromagnetic wave generation system, and determining a reference frequency based on the reflection parameters;
an optimal frequency determination step: controlling the electromagnetic wave generation system to adjust the frequency of the electromagnetic waves it generates within a selected frequency range at a preset second step size, obtaining reflection parameters corresponding to each frequency generated by the electromagnetic wave generation system, and determining an optimal frequency based on the reflection parameters, the optimal frequency being the initial frequency; wherein,
the selected frequency range is based on the reference frequency within a frequency of a range with a radius equal to the absolute value of the first step size; and the absolute value of the second step size is less than the absolute value of the first step size.

Optionally, in the reference frequency determination step, controlling the electromagnetic wave generation system to adjust the frequency of the electromagnetic waves it generates to the extent that the reflection parameter is less than a preset first reflection threshold, and determining the frequency with the reflection parameter less than the first reflection threshold as the reference frequency; and
if in the reference frequency determination step, the reflection parameter corresponding to each frequency generated by the electromagnetic wave generation system is greater than the first reflection threshold, controlling the electromagnetic wave generation system to stop operating.

Optionally, the control method further comprising: if the reflection parameter corresponding to the optimal frequency is greater than a preset second reflection threshold, controlling the electromagnetic wave generation system to stop operating; wherein,
the second reflection threshold is less than the first reflection threshold.

Optionally, in the optimal frequency determination step, first determining a search direction from the reference frequency towards higher frequencies or lower frequencies, and further controlling the electromagnetic wave generation system to adjust the frequency of the electromagnetic waves it generates in the search direction until aconcave inflection point where the reflection parameter dips is observed, and determining the frequency corresponding to the inflection point as the optimal frequency.

According to the second aspect of the present application, there is also provided a heating device, comprising:
a cavity, for placing an object to be processed;
an electromagnetic wave generation system, for generating electromagnetic waves in the cavity to heat the object to be processed; and
a controller, configured to execute any of the above-described control method.

The present application, by making the test power during the initial frequency determination process less than the heating power during the heating process of the object to be processed, reducing the heating effect on the object to be processed during the initial frequency determination process, thereby avoiding severe data lag issues in the reflection parameters used for comparison due to significant temperature changes in the food during the initial frequency determination process, this ensures the accuracy of the initial frequency, laying a good foundation for subsequent heating.

Specifically, the present application sets the test power at 8W to 15W and the alternative frequency range at 350MHz to 500MHz, which reduces the heating effect on the object to be processed during the initial frequency determination process while preventing issues of inaccurate initial frequency caused by the reflection parameters cannot accurately reflect the food's reflection of electromagnetic waves due to weak penetration of the electromagnetic waves, thereby further improving heating efficiency and effectiveness.

Furthermore, the present application first determines a reference frequency with a larger step size to represent the rough position of the optimal frequency, and then determines the optimal frequency with a smaller step size near the reference frequency as the initial frequency. Compared to the prior art method of determining the optimal frequency by traversing all frequencies, this method can increase the efficiency of determining the optimal frequency several times, thereby reducing the total heating time, minimizing unnecessary energy consumption, and improving the energy efficiency ratio of the heating device.

According to the following detailed description of specific embodiments of the present application in conjunction with the accompanying drawings, a person skilled in the art will better understand the above and other purposes, advantages and features of the present application.

### BRIEF DESCRIPTION OF DRAWINGS

Some specific embodiments of the present application will be described in detail later in an exemplary and not limiting manner with reference to the accompanying drawings. The same reference numerals in the drawings denote the same or similar parts or sections. It should be understood by those skilled in the art that the drawings may not be drawn to scale. In the drawings:
Figure 1 is a schematic structural diagram of a heating device according to an embodiment of the present application;
Figure 2 is a schematic structural diagram of the controller in Figure 1;
Figure 3 is a schematic relationship line graph of electromagnetic wave frequency and reflection parameters;
Figure 4 is a schematic flowchart of a control method for a heating device according to an embodiment of the present application;
Figure 5 is a schematic detailed flowchart of a control method for a heating device according to an embodiment of the present application.

### DETAILED DESCRIPTION OF EMBODIMENTS

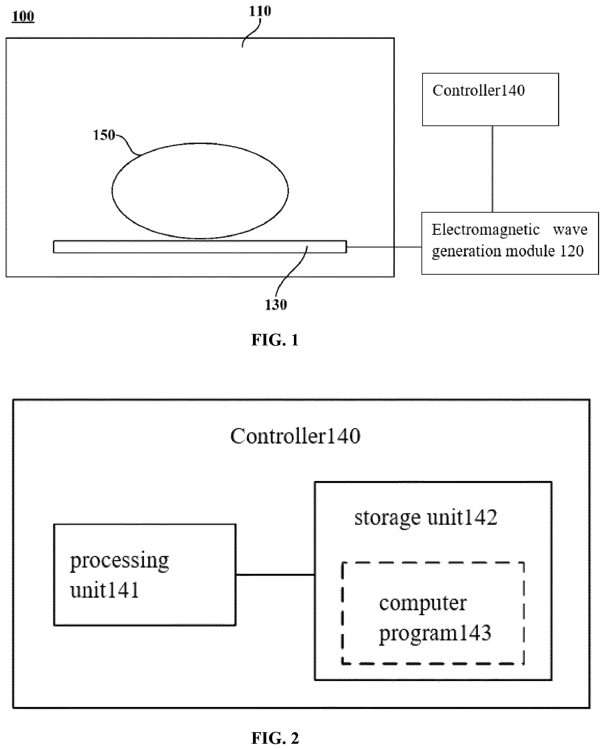

Figure 1 is a schematic structural diagram of a heating device 100 according to an embodiment of the present application. Referring to Figure 1, the heating device 100 may comprises a cavity 110, an electromagnetic wave generation system, and a controller 140.

The cavity 110 may comprise a cylinder and a door. The cylinder may be used to place an object to be processed 150. The door may be used to open and close the access port of the cylinder.

The cylinder and door may be equipped with electromagnetic shielding features to reduce electromagnetic leakage. The cylinder may be made of metal and set to ground.

The electromagnetic wave generation system may be at least partially located within the cavity 110 or connected to the cavity 110 to generate electromagnetic waves within the cavity 110, thereby heating the object to be processed 150.

The electromagnetic wave generation system may comprise an electromagnetic wave generation module 120, a radiation antenna 130 electrically connected to the electromagnetic wave generation module 120, and a power supply for powering the electromagnetic wave generation module 120.

The electromagnetic wave generation module 120 may be configured to generate electromagnetic wave signals. The radiation antenna 130 may be located within the cavity 110 to generate electromagnetic waves within the cavity 110. The electromagnetic wave generation module 120 may comprise a variable frequency source and a power amplifier.

Figure 2 is a schematic structural diagram of the controller 140 in Figure 1. Referring to Figure 2, the controller 140 may comprise a processing unit 141 and a storage unit 142. Wherein the storage unit 142 stores a computer program 143, and when the computer program 143 is executed by the processing unit 141, implements the control method of the present application.

Specifically, the processing unit 141 may be configured to first control the electromagnetic wave generation module 120 to adjust the frequency of the electromagnetic wave signals it generates within an alternative frequency range at a test power, obtaining reflection parameters corresponding to each frequency generated by the electromagnetic wave generation system, and determining an initial frequency based on the reflection parameters, then control the electromagnetic wave generation module 120 to generate electromagnetic wave signals at a power of a heating power and a frequency of the initial frequency to heat the object to be processed. Wherein, the test power may be less than the heating power to avoid severe data lag issues in the reflection parameters used for comparison due to significant temperature changes in the object to be processed150 during the initial frequency determination process, thereby ensuring the accuracy of the initial frequency.

In some embodiments, the test power may be 8W to 15W, such as 8W, 10W, or 15W. The alternative frequency range may be 350MHz to 500MHz, to prevent issues of inaccurate initial frequency caused by the reflection parameters cannot accurately reflect the object to be processed 150's reflection of electromagnetic waves due to weak penetration of the electromagnetic waves.

In further embodiments, the alternative frequency range may be 400MHz to 460MHz to further improve heating effects.

In some embodiments, the heating power may be 60W to 100W, such as 60W, 70W, 80W, or 100W, to enhance heating efficiency and mitigate local overheating issues.

In some embodiments, the processing unit 141 may be configured to control the electromagnetic wave generation module 120 to first adjust the frequency of the electromagnetic wave signals to the initial frequency and then adjust the power of the electromagnetic wave signals to the heating power.

In some embodiments, the processing unit 141 may be configured to first determine a reference frequency fb for searching the optimal frequency and then determine an optimal frequency fg suitable for heating as the initial frequency.

Specifically, the processing unit 141 may control the electromagnetic wave generation module 120 to adjust the frequency of the electromagnetic wave signals it generates within a preset alternative frequency range at a preset first step size W1, obtain reflection parameters corresponding to each frequency generated by the electromagnetic wave generation module 120, and determine the reference frequency fb based on the reflection parameters.

The processing unit 141 may be further configured to control the electromagnetic wave generation module 120 to adjust the frequency of the electromagnetic wave signals it generates within a selected frequency range at a preset second step size W2, obtain reflection parameters corresponding to each frequency generated by the electromagnetic wave generation module 120, and determine the optimal frequency fg based on the reflection parameters. Wherein, the selected frequency range may be based on the reference frequency fb within a frequency of a range with a radius equal to the absolute value of the first step size W1.

The absolute value of the second step size W2 may be less than the absolute value of the first step size W1.

The heating device 100 of the present application first determines a reference frequency with a larger step size to represent the rough position of the optimal frequency and then determines the optimal frequency with a smaller step size near the reference frequency as the initial frequency. Compared to the prior art method of determining the optimal frequency by traversing all frequencies, this method can increase the efficiency of determining the optimal frequency several times, thereby reducing the total heating time, minimizing unnecessary energy consumption, and improving the energy efficiency ratio of the heating device 100.

In some embodiments, the reflection parameter may be the return loss S11. The reflection parameter may also be the reflection power value of the electromagnetic wave signals reflected back to the electromagnetic wave generation module 120.

In some embodiments, the processing unit 141 may be configured to search the reference frequency fb incrementally from the minimum value of the alternative frequency range. That is, the first step size W1 is a positive number.

In some alternative embodiments, the processing unit 141 may also be configured to search the reference frequency fb decrementally from the maximum value of the alternative frequency range. That is, the first step size W1 is a negative number.

The absolute value of the first step size W1 may be 5MHz to 10MHz, such as 5MHz, 7MHz, or 10MHz.

The absolute value of the second step size W2 may be 1MHz to 2MHz, such as 1MHz, 1.5MHz, or 2MHz.

In some embodiments, the processing unit 141 may be configured to control the electromagnetic wave generation module 120 to adjust the frequency of the electromagnetic wave signals it generates to the extent that the reflection parameter is less than a preset first reflection threshold S1, and determine the frequency with the reflection parameter less than the first reflection threshold S1 as the reference frequency fb. That is, the processing unit 141 determines the frequency at which the reflection parameter first becomes less than the first reflection threshold S1 as the reference frequency fb, thereby obtaining an accurate optimal frequency fg while further improving the efficiency of determining the optimal frequency fg.

The first reflection threshold S1 may be -8dB to -5dB, such as -8dB, -6dB, or -5dB.

In some further embodiments, the processing unit 141 may be configured to control the electromagnetic wave generation module 120 to stop operating when the reflection parameter corresponding to each frequency generated by the electromagnetic wave generation module 120 is greater than the first reflection threshold S1, to avoid poor heating effects and damage to the electromagnetic wave generation system.

The processing unit 141 may also be configured to issue a visual signal and/or an auditory signal to alert the user of a fault when the reflection parameter corresponding to each frequency generated by the electromagnetic wave generation module 120 is greater than the first reflection threshold S1, thereby enhancing safety and user experience.

In some embodiments, the processing unit 141 may be configured to control the electromagnetic wave generation module 120 to adjust the frequency of the electromagnetic wave signals it generates until a concave inflection point where the reflection parameter dips is observed, and determine the frequency corresponding to the inflection point as the optimal frequency fg, to achieve excellent heating effects. The reflection parameter corresponding to the frequency before the optimal frequency fg and the frequency after the optimal frequency fg are both greater than the reflection parameter of the optimal frequency fg (i.e., there is a concave inflection point).

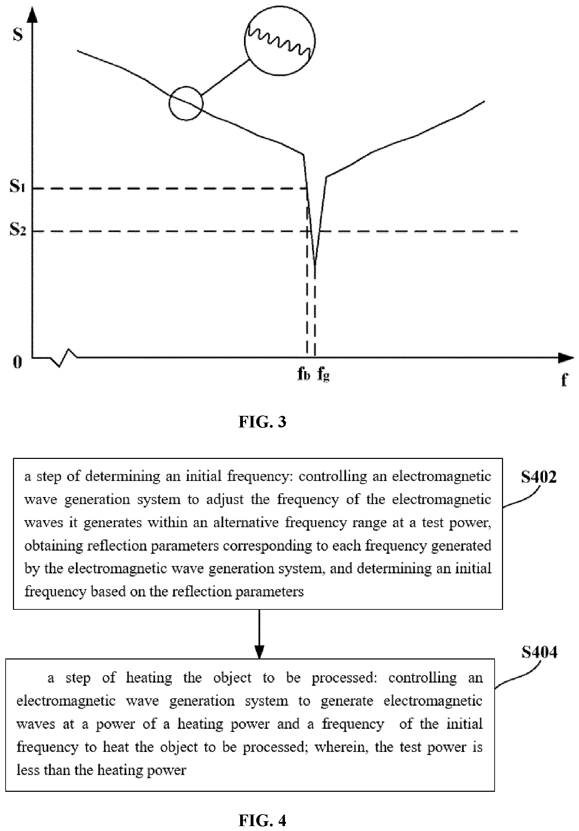

Figure 3 is a schematic relationship line graph of electromagnetic wave frequency and reflection parameters (in Figure 3, "f" represents "frequency" and "S" represents "reflection parameter"). Referring to Figure 3, the inventors of the present application creatively recognized that, the reflection parameter of the electromagnetic wave generation system undergoes a sudden change at the optimal frequency fg and the reflection parameter changes near the optimal frequency fg have a clear pattern, while the reflection parameters at other frequencies have small fluctuations. Determining the reference frequency fb based on the first reflection threshold S1 first can effectively prevent misjudgment of the inflection point of the optimal frequency fg, thereby improving the accuracy of the optimal frequency fg.

In some further embodiments, the processing unit 141 may be configured to first determine the search direction from the reference frequency fb towards higher frequencies or lower frequencies, and then further control the electromagnetic wave generation module 120 to adjust the frequency of the electromagnetic wave signals it generates in the search direction until a concave inflection point where the reflection parameter dips is observed.

In some exemplary embodiments, the processing unit 141 may be configured to separately obtain a reflection parameters of a frequency that is greater than the reference frequency fb than the second step size W2 and a frequency that is less than the reference frequency fb than the second step size W2, compare the magnitude of the two reflection parameters, and determine the direction corresponding to the frequency with the smaller reflection parameter as the search direction.

In some further embodiments, the processing unit 141 may be configured to control the electromagnetic wave generation module 120 to stop operating when the reflection parameter corresponding to the optimal frequency fg is greater than a preset second reflection threshold S2, to avoid poor heating effects.

The second reflection threshold S2 may be less than the first reflection threshold S1. The second reflection threshold S2 may be -10dB to -7dB, such as - 10dB, -8dB, or -7dB.

The processing unit 141 may also be configured to issue a visual signal and/or an auditory signal to alert the user of a fault when the reflection parameter corresponding to the optimal frequency fg is greater than the preset second reflection threshold S2, thereby enhancing safety and user experience.

In some further embodiments, the processing unit 141 may be configured to determine the remaining heating time based on the optimal frequency fg when the optimal frequency fg is greater than or equal to a preset minimum frequency threshold fi and less than or equal to a preset maximum frequency threshold fa.

The processing unit 141 may be configured to start a countdown after determining the remaining heating time, and when the remaining heating time is 0, control the electromagnetic wave generation module 120 to stop operating and issue a visual signal and/or an auditory signal indicating the completion of heating.

In some further embodiments, the processing unit 141 may be configured to control the electromagnetic wave generation module 120 to stop operating when the optimal frequency fg is less than the minimum frequency threshold fi, to avoid excessively long heating times.

The difference between the minimum frequency threshold fi and the minimum value of the alternative frequency range may be 15% to 30% of the difference between the maximum and minimum values of the alternative frequency range, such as 15%, 20%, 25%, or 30%.

The processing unit 141 may also be configured to issue a visual signal and/or an auditory signal indicating overload when the optimal frequency fg is less than the minimum frequency threshold fi, to enhance user experience.

In some further embodiments, the processing unit 141 may be configured to control the electromagnetic wave generation module 120 to stop operating when the optimal frequency fg is greater than the maximum frequency threshold fa, to avoid damaging the electromagnetic wave generation system.

The difference between the maximum value of the alternative frequency range and the maximum frequency threshold fa may be 5% to 10% of the difference between the maximum and minimum values of the alternative frequency range, such as 5%, 7%, 8%, or 10%.

The processing unit 141 may also be configured to issue a visual signal and/or an auditory signal indicating no load when the optimal frequency fg is greater than the maximum frequency threshold fa, to enhance safety and user experience.

In some embodiments, the processing unit 141 may be configured to, after controlling the electromagnetic wave generation module 120 to generate electromagnetic wave signals at the initial frequency, control the electromagnetic wave generation module 120 to adjust the frequency of the electromagnetic wave signals it generates when a preset frequency modulation condition is met, to meet a preset matching condition, and control the electromagnetic wave generation module 120 to generate electromagnetic wave signals at the frequency that meets the preset matching condition until met the preset frequency modulation condition next time, to improve heating efficiency.

The preset frequency modulation condition may be that the reflection parameter of the electromagnetic wave generation system is greater than a preset third reflection threshold.

The preset matching condition may be that the reflection parameter of the electromagnetic wave generation system exhibits a concave inflection point.

During the process from meeting the preset frequency modulation condition to meeting the preset matching condition, the power of the electromagnetic wave signals generated by the electromagnetic wave generation module 120 may be the same as the heating power or the power of the electromagnetic wave signals between the previous time the preset matching condition was met and this time the preset frequency modulation condition is met, to ensure heating efficiency.

When the preset frequency modulation condition is met, the processing unit 141 may be configured to control the electromagnetic wave generation module 120 to adjust from the initial frequency or the frequency of the electromagnetic wave signals between the previous time the preset matching condition was met and this time the preset frequency modulation condition is met in the direction of a lower frequency, to shorten the frequency matching time and avoid undesirable energy waste.

In some embodiments, the processing unit 141 may be configured to control the electromagnetic wave generation module 120 to reduce the power of the electromagnetic wave signals it generates when the cumulative frequency difference Δf of any one time or more times the preset matching condition is met within a preset number of times is greater than a power reduction frequency difference threshold, to effectively prevent the hot spot from continuing to rapidly increase in temperature and improve the temperature uniformity of the object to be processed 150.

The processing unit 141 may be configured to calculate the single frequency difference between the frequency that meets the preset frequency modulation condition and the frequency that meets the preset matching condition for each time, and store the single frequency differences of the last preset number of times in the storage unit 142, to facilitate timely determination of the cumulative frequency difference Δf of any one or more frequency adjustments.

The single frequency difference is the absolute value of the difference between the frequency that meets the preset frequency modulation condition and the frequency that meets the preset matching condition. The cumulative frequency difference Δf is the sum of the corresponding number of single frequency differences. The processing unit 141 may further be configured to extend the remaining heating time while controlling the electromagnetic wave generation module 120 to reduce the power of the electromagnetic wave signals it generates, to avoid incomplete heating.

The reduction ratio of the power of the electromagnetic wave signals may be less than the extension ratio of the remaining heating time, to improve temperature uniformity while ensuring that the heating of the object to be processed 150 stops at the user's desired state.

It should be noted that the heating device 100 of the present application is particularly suitable for application in refrigerators, where the cavity 110 may be set in a storage compartment of the refrigerator.

Figure 4 is a schematic flowchart of a control method for the heating device 100 according to an embodiment of the present application. Referring to Figure 4, the control method for the heating device 100 of the present application may include the following steps:
A step of determining an initial frequency (step S402): control the electromagnetic wave generation system to adjust the frequency of the electromagnetic waves it generates within an alternative frequency range at a test power, obtain reflection parameters corresponding to each frequency generated by the electromagnetic wave generation system, and determine the initial frequency based on the reflection parameters.

A step of heating the object to be processed (step S404): control the electromagnetic wave generation system to generate electromagnetic waves at a power of a heating power and a frequency of the initial frequency to heat the object to be processed 150. The test power may be less than the heating power to avoid severe data lag issues in the reflection parameters used for comparison due to significant temperature changes in the object to be processed during the initial frequency determination process, thereby ensuring the accuracy of the initial frequency.

In some embodiments, the test power may be 8W to 15W, such as 8W, 10W, or 15W. The alternative frequency range may be 350MHz to 500MHz to prevent issues of inaccurate initial frequency caused by the reflection parameters cannot accurately reflect the object to be processed150's reflection of electromagnetic waves due to weak penetration of the electromagnetic waves.

In some further embodiments, the alternative frequency range may be 400MHz to 460MHz to further improve heating effects.

In some embodiments, the heating power may be 60W to 100W, such as 60W, 70W, 80W, or 100W, to improve heating efficiency and mitigate local overheating issues.

In some embodiments, the step of heating the object to be processed may control the electromagnetic wave generation module 120 to first adjust the frequency of the electromagnetic wave signals to the initial frequency and then adjust the power of the electromagnetic wave signals to the heating power.

In some embodiments, the initial frequency determination step may further comprise a reference frequency determination step and an optimal frequency determination step.

Reference frequency determination step: control the electromagnetic wave generation system to adjust the frequency of the electromagnetic waves it generates within a preset alternative frequency range at a preset first step size W1, obtain reflection parameters corresponding to each frequency generated by the electromagnetic wave generation system, and determine the reference frequency fb based on the reflection parameters;
Optimal frequency determination step: control the electromagnetic wave generation system to adjust the frequency of the electromagnetic waves it generates within a selected frequency range at a preset second step size W2, obtain reflection parameters corresponding to each frequency generated by the electromagnetic wave generation system, and determine the optimal frequency fg as the initial frequency based on the reflection parameters. The selected frequency range may be based on the reference frequency fb within a frequency of a range with a radius equal to the absolute value of the first step size W1.

The absolute value of the second step size W2 may be less than the absolute value of the first step size W1.

The control method of the present application first determines a reference frequency with a larger step size to represent the rough position of the optimal frequency and then determines the optimal frequency with a smaller step size near the reference frequency as the initial frequency. Compared to the prior art method of determining the optimal frequency by traversing all frequencies, this method can increase the efficiency of determining the optimal frequency several times, thereby reducing the total heating time, minimizing unnecessary energy consumption, and improving the energy efficiency ratio of the heating device 100.

In some embodiments, the reflection parameter may be the return loss S11. The reflection parameter may also be the reflection power value of the electromagnetic wave signals reflected back to the electromagnetic wave generation module 120.

In some embodiments, the reference frequency determination step may search the reference frequency fb incrementally from the minimum value of the alternative frequency range. That is, the first step size W1 is a positive number.

In some alternative embodiments, the reference frequency determination step may also search the reference frequency fb decrementally from the maximum value of the alternative frequency range. That is, the first step size W1 is a negative number.

The absolute value of the first step size W1 may be 5MHz to 10MHz, such as 5MHz, 7MHz, or 10MHz.

The absolute value of the second step size W2 may be 1MHz to 2MHz, such as 1MHz, 1.5MHz, or 2MHz.

In some embodiments, during the reference frequency determination step, the electromagnetic wave generation module 120 may be controlled to adjust the frequency of the electromagnetic wave signals it generates to the extent that the reflection parameter is less than a preset first reflection threshold S1, and determine the frequency with the reflection parameter less than the first reflection threshold S1 as the reference frequency fb. That is, the frequency at which the reflection parameter first becomes less than the first reflection threshold S1 is determined as the reference frequency fb, thereby obtaining an accurate optimal frequency fg while further improving the efficiency of determining the optimal frequency fg.

The first reflection threshold S1 may be -8dB to -5dB, such as -8dB, - 6dB, or -5dB.

In further embodiments, if the reflection parameter corresponding to each frequency generated by the electromagnetic wave generation module 120 is greater than the first reflection threshold S1 during the reference frequency determination step, the electromagnetic wave generation module 120 may be controlled to stop operating to avoid poor heating effects and damage to the electromagnetic wave generation system.

If the reflection parameter corresponding to each frequency generated by the electromagnetic wave generation module 120 is greater than the first reflection threshold S1 during the reference frequency determination step, a visual signal and/or an auditory signal may be issued to alert the user of a fault, thereby enhancing safety and user experience.

In some embodiments, during the optimal frequency determination step, the electromagnetic wave generation module 120 may be controlled to adjust the frequency of the electromagnetic wave signals it generates until a concave inflection point where the reflection parameter dips is observed, and determine the frequency corresponding to the inflection point as the optimal frequency fg, to achieve excellent heating effects. The reflection parameter corresponding to the frequency before the optimal frequency fg and the frequency after the optimal frequency fg are both greater than the reflection parameter of the optimal frequency fg (i.e., there is a concave inflection point).

In some further embodiments, during the optimal frequency determination step, the search direction may be first determined from the reference frequency fb towards higher frequencies or lower frequencies, and then the electromagnetic wave generation module 120 may be further controlled to adjust the frequency of the electromagnetic wave signals it generates in the search direction until a concave inflection point where the reflection parameter dips is observed.

In some exemplary embodiments, the reflection parameters of the frequency that is greater than the reference frequency fb than the second step size W2 and the frequency that is less than the reference frequency fb than the second step size W2 may be separately obtained, and the magnitude of these two reflection parameters may be compared. The direction corresponding to the smaller reflection parameter may be determined as the search direction.

In some further embodiments, if the reflection parameter corresponding to the optimal frequency fg is greater than a preset second reflection threshold S2, the electromagnetic wave generation module 120 may be controlled to stop operating to avoid poor heating effects.

The second reflection threshold S2 may be less than the first reflection threshold S1. The second reflection threshold S2 may be -10dB to -7dB, such as - 10dB, -8dB, or -7dB.

If the reflection parameter corresponding to the optimal frequency fg is greater than the preset second reflection threshold S2, a visual signal and/or an auditory signal may be issued to alert the user of a fault, thereby enhancing safety and user experience.

In some further embodiments, if the optimal frequency fg is greater than or equal to a preset minimum frequency threshold fi and less than or equal to a preset maximum frequency threshold fa, the remaining heating time may be determined based on the optimal frequency fg.

After determining the remaining heating time, a countdown may start, and when the remaining heating time is 0, the electromagnetic wave generation module 120 may be controlled to stop operating and a visual signal and/or an auditory signal may be issued to indicate the completion of heating.

In some further embodiments, if the optimal frequency fg is less than the minimum frequency threshold fi, the electromagnetic wave generation module 120 may be controlled to stop operating to avoid excessively long heating times.

The difference between the minimum frequency threshold fi and the minimum value of the alternative frequency range may be 15% to 30% of the difference between the maximum and minimum values of the alternative frequency range, such as 15%, 20%, 25%, or 30%.

If the optimal frequency fg is less than the minimum frequency threshold fi, a visual signal and/or an auditory signal may be issued to indicate overload, to enhance user experience.

In some further embodiments, if the optimal frequency fg is greater than the maximum frequency threshold fa, the electromagnetic wave generation module 120 may be controlled to stop operating to avoid damaging the electromagnetic wave generation system.

The difference between the maximum value of the alternative frequency range and the maximum frequency threshold fa may be 5% to 10% of the difference between the maximum and minimum values of the alternative frequency range, such as 5%, 7%, 8%, or 10%.

If the optimal frequency fg is greater than the maximum frequency threshold fa, a visual signal and/or an auditory signal may be issued to indicate no load, to enhance safety and user experience.

In some embodiments, the control method of the present application may further include a frequency matching step after the initial frequency determination step.

The frequency matching step may involve pausing the step of heating the object to be processed if a preset frequency modulation condition is met, controlling the electromagnetic wave generation module 120 to adjust the frequency of the electromagnetic wave signals it generates to meet a preset matching condition, correcting the frequency of the electromagnetic waves in the the step of heating the object to be processed to the frequency that meets the preset matching condition, and continuing the step of heating the object to be processed to improve heating efficiency.

The preset frequency modulation condition may be that the reflection parameter of the electromagnetic wave generation system is greater than a preset third reflection threshold.

The preset matching condition may be that the reflection parameter of the electromagnetic wave generation system exhibits a concave inflection point.

The power of the electromagnetic wave signals in the frequency matching step may be the same as the power of the electromagnetic wave signals in the previous object heating step, to ensure heating efficiency.

The frequency matching step may control the electromagnetic wave generation module 120 to adjust the frequency of the electromagnetic wave signals it generates from the frequency of the electromagnetic wave signals in the previous step of heating the object to be processed towards lower frequencies, to shorten the frequency matching time and avoid undesirable energy waste.

In some embodiments, the control method of the present application may further include a power adjustment step. The power adjustment step may control the electromagnetic wave generation module 120 to reduce the power of the electromagnetic wave signals it generates when the cumulative frequency difference Δf of any one time or more times the preset matching condition is met within a preset number of times is greater than a power reduction frequency difference threshold, to effectively prevent the hot spot from continuing to rapidly increase in temperature and improve the temperature uniformity of the object to be processed 150.

The frequency matching step may further comprise calculating the single frequency difference before and after the frequency adjustment, and storing the single frequency differences of the last preset number of times, to facilitate timely determination of the cumulative frequency difference Δf of any one or more frequency adjustments.

The single frequency difference is the absolute value of the difference between the frequency before the frequency adjustment and the frequency after the frequency adjustment. The cumulative frequency difference Δf is the sum of the corresponding number of single frequency differences.

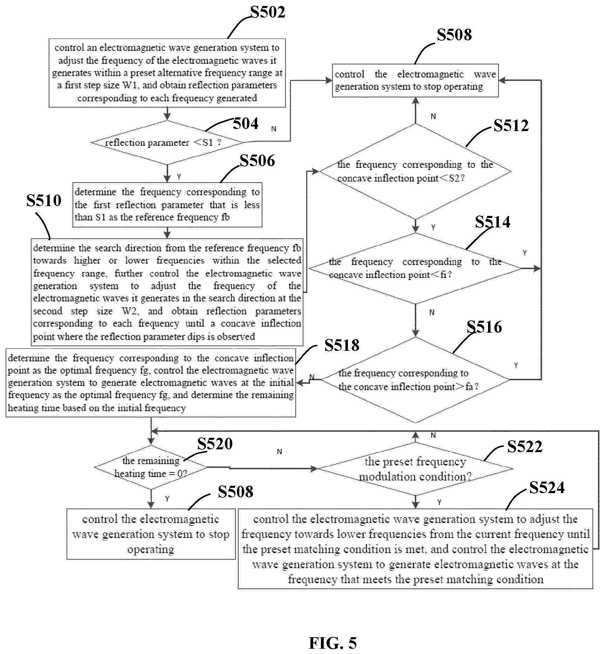

Figure 5 is a schematic detailed flowchart of a control method for the heating device 100 according to an embodiment of the present application (in Figure 5, "Y" represents "Yes"; "N" represents "No"). Referring to Figure 5, the control method for the heating device 100 of the present application may include the following detailed steps:
Step S502: control the electromagnetic wave generation system to adjust the frequency of the electromagnetic waves it generates within a preset alternative frequency range at a preset first step size W1, and obtain reflection parameters corresponding to each frequency generated by the electromagnetic wave generation system.

Step S504: determine if there is a reflection parameter less than the first reflection threshold S1. If yes, proceed to Step S506; if no, proceed to Step S508.

Step S506: determine the frequency corresponding to the first reflection parameter that is less than the first reflection threshold S1 as the reference frequency fb. Proceed to Step S510.

Step S508: control the electromagnetic wave generation system to stop operating.

Step S510: determine the search direction from the reference frequency fb towards higher or lower frequencies within the selected frequency range, further control the electromagnetic wave generation system to adjust the frequency of the electromagnetic waves it generates in the search direction at the second step size W2, and obtain reflection parameters corresponding to each frequency until a concave inflection point where the reflection parameter dips is observed.

Step S512: determine if the reflection parameter corresponding to the inflection point is less than the second reflection threshold S2. If yes, proceed to Step S514; if no, proceed to Step S508.

Step S514: determine if the frequency corresponding to the concave inflection point is less than the minimum frequency threshold fi. If yes, proceed to Step S508; if no, proceed to Step S516.

Step S516: determine if the frequency corresponding to the concave inflection point is greater than the maximum frequency threshold fa. If yes, proceed to Step S518; if no, proceed to Step S508.

Step S518: determine the frequency corresponding to the concave inflection point as the optimal frequency fg, control the electromagnetic wave generation system to generate electromagnetic waves at the initial frequency as the optimal frequency fg, and determine the remaining heating time based on the initial frequency.

Step S520: determine if the remaining heating time is equal to 0. If yes, proceed to Step S508; if no, proceed to Step S522.

Step S522: determine if the preset frequency modulation condition is met. If yes, proceed to Step S524; if no, return to Step S520.

Step S524: control the electromagnetic wave generation system to adjust the frequency towards lower frequencies from the current frequency until the preset matching condition is met, and control the electromagnetic wave generation system to generate electromagnetic waves at the frequency that meets the preset matching condition. Return to Step S520.

Thus, those skilled in the art should recognize that although multiple exemplary embodiments of the present application have been shown and described in detail, many other variations or modifications that conform to the principles of the present application can be directly determined or derived from the content disclosed herein without departing from the spirit and scope of the present application. Therefore, the scope of the present application should be understood and considered to cover all such other variations or modifications.

## Claims

1. A control method for a heating device, the heating device comprising a cavity for placing an object to be processed, and an electromagnetic wave generation system for generating electromagnetic waves in the cavity to heat the object to be processed, wherein the control method comprises:
a step of determining an initial frequency: controlling the electromagnetic wave generation system to adjust the frequency of the electromagnetic waves it generates within an alternative frequency range at a test power, obtaining reflection parameters corresponding to each frequency generated by the electromagnetic wave generation system, and determining an initial frequency based on the reflection parameters;
a step of heating the object to be processed: controlling the electromagnetic wave generation system to generate electromagnetic waves at a power of a heating power and a frequency of the initial frequency to heat the object to be processed; wherein
the test power is less than the heating power.

2. The control method according to claim 1, wherein,
the test power is 8W to 15W; and
the alternative frequency range is 350MHz to 500MHz.

3. The control method according to claim 1, wherein,
the heating power is 60W to 100W.

4. The control method according to claim 1, wherein,
in the step of heating the object to be processed, the frequency of the electromagnetic waves is first adjusted to the initial frequency, and then the power of the electromagnetic waves is adjusted to the heating power.

5. The control method according to claim 1, wherein, after the step of determining an initial frequency, further comprising:
a frequency matching step: if a preset frequency modulation condition is met, pausing the step of heating the object to be processed, controlling the electromagnetic wave generation system to adjust the frequency of the electromagnetic waves it generates to meet a preset matching condition, correcting the frequency of the electromagnetic waves in the step of heating the object to be processed to the frequency that meets the preset matching condition, and continuing the step of heating the object to be processed; wherein,
the power of the electromagnetic waves in the frequency matching step is the same as the power of the electromagnetic waves in the step of heating the object to be processed.

6. The control method according to claim 1, wherein, the step of determining an initial frequency further comprises:
a reference frequency determination step: controlling the electromagnetic wave generation system to adjust the frequency of the electromagnetic waves it generates within a preset alternative frequency range at a preset first step size, obtaining reflection parameters corresponding to each frequency generated by the electromagnetic wave generation system, and determining a reference frequency based on the reflection parameters;
an optimal frequency determination step: controlling the electromagnetic wave generation system to adjust the frequency of the electromagnetic waves it generates within a selected frequency range at a preset second step size, obtaining reflection parameters corresponding to each frequency generated by the electromagnetic wave generation system, and determining an optimal frequency based on the reflection parameters, the optimal frequency being the initial frequency; wherein,
the selected frequency range is based on the reference frequency within a frequency of a range with a radius equal to the absolute value of the first step size; and
the absolute value of the second step size is less than the absolute value of the first step size.

7. The control method according to claim 6, wherein
in the reference frequency determination step, controlling the electromagnetic wave generation system to adjust the frequency of the electromagnetic waves it generates to the extent that the reflection parameter is less than a preset first reflection threshold, and determining the frequency with the reflection parameter less than the first reflection threshold as the reference frequency; and
if in the reference frequency determination step, the reflection parameter corresponding to each frequency generated by the electromagnetic wave generation system is greater than the first reflection threshold, controlling the electromagnetic wave generation system to stop operating.

8. The control method according to claim 7, further comprising:
if the reflection parameter corresponding to the optimal frequency is greater than a preset second reflection threshold, controlling the electromagnetic wave generation system to stop operating; wherein,
the second reflection threshold is less than the first reflection threshold.

9. The control method according to claim 6, wherein
in the optimal frequency determination step, first determining a search direction from the reference frequency towards higher frequencies or lower frequencies, and further controlling the electromagnetic wave generation system to adjust the frequency of the electromagnetic waves it generates in the search direction until aconcave inflection point where the reflection parameter dips is observed, and determining the frequency corresponding to the inflection point as the optimal frequency.

10. A heating device, comprising:
a cavity, for placing an object to be processed;
an electromagnetic wave generation system, for generating electromagnetic waves in the cavity to heat the object to be processed; and
a controller, configured to execute the control method according to claim 1.
